# Europäisches Patentamt

# European Patent Office

# Office européen des brevets

(19)

(11) Veröffentlichungsnummer: **0 089 445**
**B1**

(12) ## EUROPÄISCHE PATENTSCHRIFT

(45) Veröffentlichungstag der Patentschrift:
**11.06.86**

(51) Int. Cl.⁴: **B 29 C 51/32**

(21) Anmeldenummer: **82710014.0**

(22) Anmeldetag: **19.03.82**

(54) Verfahren und Vorrichtung zum Herstellen von Abdeckwannen.

(43) Veröffentlichungstag der Anmeldung:
28.09.83 Patentblatt 83/39

(45) Bekanntmachung des Hinweises auf die Patenterteilung:
11.06.86 Patentblatt 86/24

(84) Benannte Vertragsstaaten:
**AT BE DE FR GB IT LU NL**

(56) Entgegenhaltungen:
FR - A - 1 344 338
FR - A - 2 206 166
GB - A - 742 516
US - A - 3 755 522

(73) Patentinhaber: **ITT Reiss International Gesellschaft mit beschränkter Haftung, Postfach 180,
D-7992 Tettnang 1 (DE)**

(72) Erfinder: **Friedrich, Kurt, Obereisenbach 78,
D-7992 Tettnang 1 (DE)**

(74) Vertreter: **Graf, Georg Hugo, Dipl.-Ing., c/o Standard Elektrik Lorenz AG Patent- und Lizenzwesen Postfach 300 929 Kurze Strasse 8,
D-7000 Stuttgart 30 (DE)**

EP 0 089 445 B1

## Beschreibung

Das vorliegende Herstellungsverfahren und die Vorrichtung zur Durchführung des Verfahrens kommen bei der Fertigung von Abdeckwannen für Langfeldleuchten zur Anwendung, die vielseitigen Beleuchtungszwecken dienen.

Die Erfindung geht aus von einem im Oberbegriff des Anspruchs 1 genannten Stand der Technik gemäß FR-A-1 344 338. Bei einem bei Leuchtenherstellern üblicherweise angewendeten Herstellungsverfahren für Abdeckwannen wird die vorgeheizte Platte oder ein von Bandmaterial abgetrennter Zuschnitt in die geöffnete Streckform eingelegt und die Formhälften dann geschlossen. Während der Schließbewegung erfassen Niederhalter der einen Formhälfte das allseitig überstehende Plattenmaterial und fixieren es durch Andruck gegen die Unterseite der Schieber des sich absenkenden Formennestes. Ist die Schließbewegung beendet, beginnt das mittels Einblasen von Heißluft erfolgende Umformen des eingespannten Materials. Nach dem Öffnen der Streckform wird die Abdeckwanne entnommen und der allseitig überstehende Randstreifen in einem separat erfolgenden Fertigungsschritt abgesägt. Anschließend wird die fertige Abdeckwanne noch von den beim Sägen entstandenen Spänen gesäubert und dann verpackt.

Bei einem bekannten Verfahren (FR-A-1 344 338) zur Herstellung von becherförmigen Behältern aus thermoplastischem Kunststoff wird eine aus zwei Formhälften bestehende Streckform verwendet, deren eine Formhälfte drei Formennester enthält und deren andere Formhälfte mit drei entsprechenden Vorschleppstempeln versehen ist.

In der die Matrize darstellenden Formhälfte sind je Formennest in einer zylinderförmigen Aufnahme in gleichen Abständen zueinander vier im Querschnitt dreieckige Führungsleisten angeordnet, zwischen denen vier Schieber verfahrbar sind, mit denen die Seitenwand eines Behälters und sein Rand geformt werden, während der Behälterboden mittels eines in der Aufnahme sitzenden Bodenteiles ausgeformt wird.

Beim Schließen der Formhälften wird zuvor erhitztes Bandmaterial zwischen zwei Fixierplatten eingespannt. Diese enthalten Ausnehmungen, durch welche die Vorschleppstempel das Bandmaterial in die Formennester transportieren, in denen es durch den Druck von einströmendem und verdampfendem Flüssiggas umgeformt wird. Außerdem werden beim Schließen der Formhälften Schneidkanten von ringförmigen Messern gegen die Unterseiten der eingefahrenen Schieber gedrückt, welche die sich in horizontaler Ebene erstreckenden Ränder der Behälter vom Bandmaterial trennen. Fehlt ein derartiger Rand, ist das Herstellungsverfahren nicht anwendbar.

Hier will die Erfindung Abhilfe schaffen. Der Erfindung liegt deshalb die Aufgabe zugrunde, ein einfaches und kostengünstiges Verfahren zur Herstellung von Abdeckwannen für Langfeldleuchten anzugeben, bei denen die einen Stehrand aufweisenden Abdeckwannen aus thermoplastischem Kunststoff bestehen, der durch Streckformen von Band- oder Plattenmaterial hergestellt und vom überstehenden Randstreifen getrennt wird und hierfür eine geeignete Vorrichtung zur Durchführung des Herstellverfahrens zu nennen. Diese Aufgabe wird bei erhen gattungsgemäßen Verfahren bzw einer gattungsgemäßen Vorrichtung erfindungsgemäß durch die in den kennzeichnenden Teilen der Ansprüche bzw. 3 angegebenen Maßnahmen gelöst. Vorteilhafte Ausgestaltungen der Erfindung sind den Unteransprüchen zu entnehmen.

Hierdurch werden verschiedene Vorteile erzielt. Bei dem Verfahren zum Herstellen von Abdeckwannen für Langfeldleuchten entfallen zwei der zuvor notwendigen Verfahrensschritte. Erstens das erheblich zeitaufwendige und damit lohnintensive Absägen des Randstreifens. Und zweitens das Säubern der Abdeckwanne von den anhaftenden Sägespänen. Durch den Fortfall der beiden genannten Fertigungsschritte ist eine besonders wirtschaftliche Serienproduktion von Abdeckwannen möglich.

Durch Anordnen einer Schnittplatte mit außen vorgesehener Schneidkante an einer Formhälfte und Ausbilden von inneren Schieberkanten als komplementäre Schneidkante an der anderen Formhälfte steht eine funktionssichere Schneidevorrichtung zur Verfügung, die ohne großen Aufwand in das Blaswerkzeug integriert ist. Das zeitaufwendige und somit lohnintensive Absägen des Randstreifens entfällt. Das Abtrennen des Randstreifens wird bei dem kombinierten Schneide- und Blaswerkzeug praktisch ohne zusätzlichen Zeitaufwand vorgenommen, wodurch eine rationellere Fertigung von Abdeckwannen möglich ist. Von Vorteil ist auch, daß die mit dem vorliegenden Werkzeug hergestellten Abdeckwannen im Gegensatz zu denen mit nachträglich abgesägtem Randstreifen keine scharfen Kanten mehr aufweisen. Dadurch ist die beim Hantieren mit solchen Abdeckwannen bestehende Verletzungsgefahr weitgehend beseitigt. Die Erfindung wird anhand eines in Zeichnungen dargestellten Ausführungsbeispieles wie folgt näher beschrieben. In den Zeichnungen zeigt:

Fig. 1 einen Ausschnitt der Streckform mit in ihre geöffneten Formhälften eingelegtem Platten- oder Bandmaterial, vor dem Herstellen einer Abdeckwanne, längsgeschnitten;

Fig. 2 einen Ausschnitt der Streckform gemäß Fig. 1 mit geschlossenen Formhälften, während der Herstellung einer Abdeckwanne, in einer Querschnittsansicht.

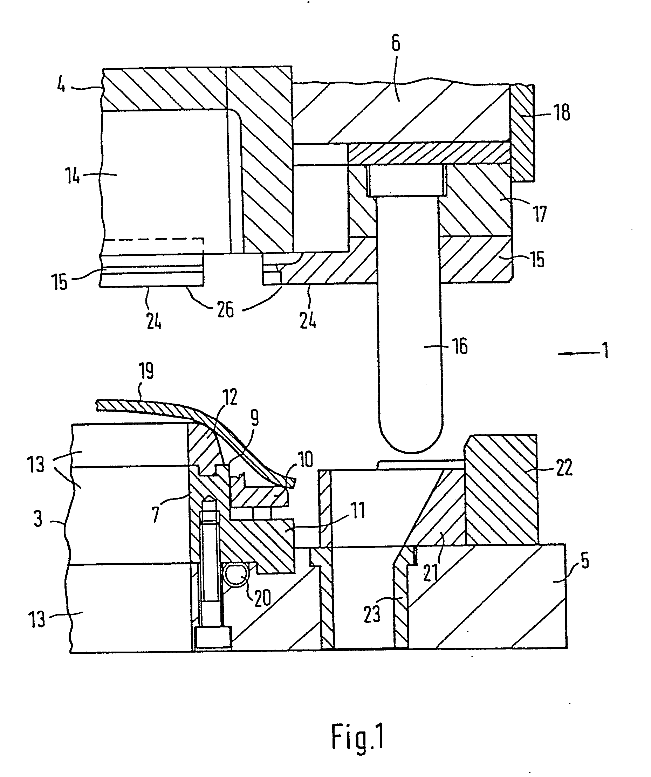

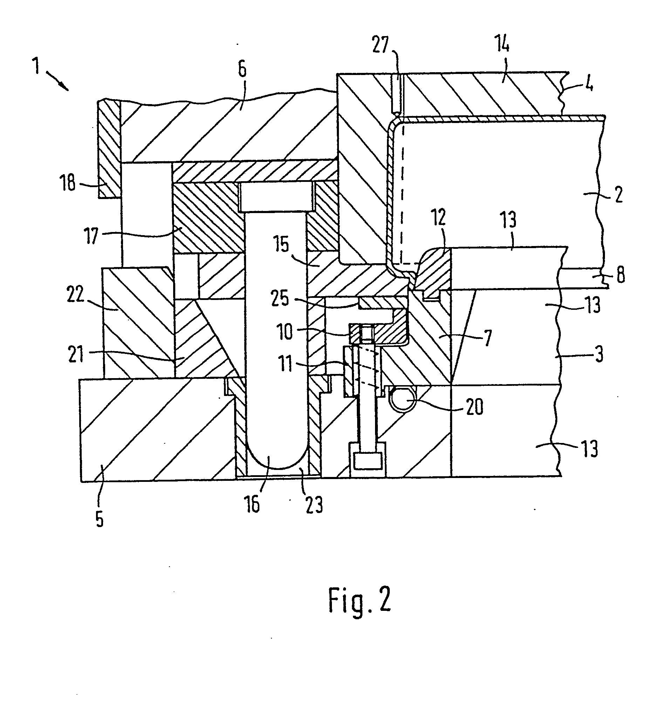

In den Fig. 1 und 2 ist die Streckform insgesamt mit 1 bezeichnet. Sie dient zur Fertigung von Abdeckwannen 2, welche aus thermoplastischem Kunststoff hergestellt werden. Die Streckform 1 ist als kombiniertes Blas- und Schneidwerkzeug ausgebildet und sie besteht im wesentlichen aus zwei verschiedenen Formhälften 3, 4, deren Einzelteile zweckmäßigerweise jeweils auf einer Grundplatte 5, 6 montiert sind.

An der Grundplatte 5 einer ersten Formhälfte 3 ist eine Schnittplatte 7 befestigt, deren wesentliche Umfangsabmessungen dem Umriß des Stehrandes 8 der Abdeckwanne 2 entsprechen. Die Außenkante der Schnittplatte 7 ist als Schneidkante 9 ausgebildet. Außerhalb der Schnittplatte 7 sind übliche Niederhalter 10 vorgesehen, die bei dem vorliegenden Ausführungsbeispiel der Streckform 1 auf einer flanschartig umlaufenden Leiste 11 der Schnittplatte 7 angeordnet sind und welche in ihren unbelasteten Stellungen die Schneidkante 9 überragen. Die Schnittplatte 7 trägt eine Klemmplatte 12, deren Außenseite gegenüber der Schneidkante 9 um das Dickenmaß des zu formenden Stehrandes 8 der Abdeckwanne 2 nach innen zurückgesetzt angeordnet ist. Grund-, Schnitt- und Klemmplatte 5, 7, 12 sind mit einem Durchbruch 13 zur Aufnahme eines Vorschleppstempels (nicht dargestellt) versehen. Dadurch erhalten Schnitt- und Klemmplatte 7, 12 die Form eines Rahmens, welcher jeweils aus einem Stück besteht oder auch aus mehreren Einzelteilen zusammengesetzt sein kann.

An der Grundplatte 6 einer zweiten Formhälfte 4 ist das Formennest 14 befestigt. Wegen des nach innen versetzt angeordneten Stehrandes 8 der Abdeckwanne 2 weist diese Formhälfte 4 wenigstens vier Schieber 15 auf, deren sich gegenüberstehende Innenseiten in eingefahrener Schieberstellung den Randbereich des Formennestes 14 bilden. Die Schieber 15 werden von Führungssäulen 16 durchsetzt, welche in Aufnahmeteilen 17 stecken, die zwischen dem Formennest 14 und entsprechenden Anschlägen 18 der Grundplatte 6 verfahrbar sind.

Zum Herstellen einer Abdeckwanne 2 wird vorgewärmtes Platten- oder Bandmaterial 19 mit allseitigem Überstand in die geöffnete Streckform 1 eingelegt. Deren Formhälften 3, 4 sind zur Vermeidung von Temperaturdifferenzen mittels an geeigneten Stellen vorgesehener Heizleitungen 20 ebenfalls vorgewärmt. In diesem Verfahrensstadium befinden sich die Schieber 15 jeweils in ihrer zurückgezogenen Stellung. Nach dem Einlegen des Platten- oder Bandmaterials 19 werden die Formhälften 3, 4 geschlossen. Beim Schließvorgang gelangen die Führungssäulen 16 der zweiten Formhälfte 4 zunächst mit in der ersten Formhälfte 3 vorgesehenen Schließstücken 21 in Eingriff, welche beispielsweise neben der Formverriegelung 22 angeordnet sind und welche das Einfahren der Schieber 15 bewirken. Danach dringen die Führungssäulen 16 in entsprechende Führungsbuchsen 23 ein. Letztere sind in Verlängerung der Schließstücke 21 in die Grundplatte 5 der ersten Formhälfte 3 eingesetzt. Bei weiter andauernder Schließbewegung wird das Platten- oder Bandmaterial 19 einerseits zwischen den Niederhaltern 10 und den Unterseiten 24 der Schieber 15 sowie andererseits zwischen den sich zugekehrten Innenseiten der Schieber 15 und den Außenseiten der Klemmplatte 12 eingespannt. Das Formennest 14 mit seinen Schiebern 15 und dem fixierten Materialüberstand senkt sich sodann weiter an der Schnittplatte 7 vorbei ab. Hierbei wird vor dem Beenden der Schließbewegung der überstehende Randstreifen 25 abgetrennt.

Wie zuvor bereits erwähnt wurde, ist in der ersten Formhälfte 3 die Schnittplatte 7 mit einer Schneidkante 9 versehen. In der zweiten Formhälfte 4 besteht die komplementäre Schneidkante 26 aus den Unterkanten der Schieberinnenseiten (Fig.1). Zur Bildung der Schneidkanten 26 sind die Schieber 15 deshalb etwas dicker bemessen, als es die Höhe des Stehrandes 8 der Abdeckwanne 2 erfordert. Dadurch kann die so gebildete, dem Umriß des Stehrandes 8 entsprechende Schneidkante 26 beim Absenken der zweiten Formhälfte 4 die Schneidkante 9 an der ersten Formhälfte passieren und den Randsteifen 25 abtrennen. Somit können also die Schneidkanten 26 der Schieber 15 maximal um das von der Formennestseite aus über die Höhe des Stehrandes 8 hinausreichende Maß an der Schneidkante 9 der Schnittplatte 7 vorbei abgesenkt werden.

Der beim Einspannen des Platten- oder Bandmaterials 19 zwischen Schieber 15 und Klemmplatte 12 verdrängte Werkstoff wird zusammen mit dem übrigen im Formennest 14 eingeschlossenen Material bei dem durch Bohrungen im Vorschleppstempel hindurch erfolgenden Einblasen von Heißluft zu einer weitgehend gleichmäßig dickwandigen Abdeckwanne 2 umgeformt. Das sich hierbei im Formennest bildende Luftpolster wird über eine Anzahl Entlüftungsbohrungen 27 abgeleitet. Nach darauffolgendem Öffnen der beiden Formhälften 3, 4 gehen die Niederhalter 10 und Schieber 15 wieder in ihre ursprungsstellung zurück und die Streckform 1 kann nach Entnehmen der fertigen Abdeckwanne 2 und Beseitigen des Randstreifens 25 für das Herstellen einer weiteren Abdeckwanne verwendet werden.

## Patentansprüche

1. Verfahren zum Herstellen von Abdeckwannen (2) mit Stehrand (8) für Langfeldleuchten, bei dem vorgewärmtes Platten- oder Bandmaterial (19) aus thermoplastischem Kunststoff mit allseitigem Überstand einer im wesentlichen aus zwei Formhälften bestehenden Streckform (1) zugeführt und in der Streckform (1) durch mechanisches und pneumatisches Umformen verarbeitet wird, wobei beim Schließen der Streckform (1) Schieber (15) aus einer zurückgezogenen Stellung in eine den Randbereich des Formennestes (14) bildende, vorgeschobene Stellung gebracht werden und der überstehende Randstreifen (25) durch an der Streckform (1) vorgesehene Schneidkanten (9, 26) abgetrennt wird,

dadurch gekennzeichnet, daß das Platten- oder Bandmaterial (19) zwischen den Unterseiten (24) der Schieber (15) und Niederhaltern (10) sowie zwischen den einander zugekehrten Innenseiten der Schieber (15) und den Außenseiten einer den Stehrand (8) formenden Klemmplatte (12) eingespannt und danach der Randstreifen (25) vor Beenden der Schließbewegung durch Absenken der zweiten Formhälfte (4) über die erste Formhälfte (3) abgetrennt wird.

2. Verfahren nach Anspruch 1, dadurch gekennzeichnet, daß nach dem Einspannen des Platten- oder Bandmaterials (19) die aus den Schiebern (15) und dem gegen diese angedrückten Randstreifen (25) bestehende Anordnung beim Absenken der zweiten Formhälfte (4) gemeinsam so über die erste Formhälfte (3) geschoben wird, daß die Schneidkante (26) der zweiten Formhälfte (4) die Schneidkante (9) der ersten Formhälfte (3) passiert.

3. Vorrichtung zum Durchführen des Verfahrens nach Anspruch 1, welche aus einer im wesentlichen zwei Formhälften (3, 4) aufweisenden Streckform (1) besteht, die zur Bildung des Formennestes (14) sowie zum Einspannen des Platten- oder Bandmaterials (19) unter anderem mit verfahrbaren Schiebern (15) und Niederhaltern (10) und zum Abtrennen des Randstreifens (25) mit Schneidkanten (9, 26) versehen ist, dadurch gekennzeichnet, daß die Streckform (1) in einer ersten Formhälfte (3) eine dem Umriß des Stehrandes (8) der Abdeckwanne (2) entsprechende Schnittplatte (7) aufweist, über welche die eingefahrenen Schieber (15) der zweiten Formhälfte (4) absenkbar sind, daß die Schneidkanten (9, 26) zum Abtrennen des Randstreifens (25) aus Innenkanten der Schieber (15) und einer Außenkante der Schnittplatte (7) bestehen und daß auf der Schnittplatte (7) eine Klemmplatte (12) angeordnet ist, deren Außenseite um das Dickenmaß des zu formenden Stehrandes (8) der Abdeckwanne (2) nach innen hinter die Schneidkante (9) der Schnittplatte (7) zurückgesetzt ist.

4. Vorrichtung nach Anspruch 3, dadurch gekennzeichnet, daß die Schieber (15) von der Formennestseite aus eine über die Höhe des Stehrandes (8) der zu formenden Abdeckwanne (2) hinausreichende Dickenabmessung aufweisen, um deren Maß die Schieber (15) mit ihren Schneidkanten (26) an der komplementären Schneidkante (9) vorbei über der Schnittplatte (7) absenkbar sind.

5. Vorrichtung nach Anspruch 3 und 4, dadurch gekennzeichnet, daß wenigstens in der Schnitt- und in der Klemmplatte (7, 12) ein Durchbruch (13) für die Aufnahme eines Vorschleppstempels enthalten ist.

6. Vorrichtung nach Anspruch 3 bis 5, dadurch gekennzeichnet, daß die Schnittplatte (7) außen eine flanschartig umlaufende Leiste (11) mit darauf angeordneten Niederhaltern (10) aufweist.

7. Vorrichtung nach einem der Ansprüche 3 bis 6, dadurch gekennzeichnet, daß die Niederhalter (10) in ihren unbelasteten Stellungen die Schneidkante (9) der Schnittplatte (7) überragen.

**Claims**

1. Method of manufacturing lamp covers (2) with a vertical rim (8) for long fluorescent lamps, in which a preheated, thermoplastic plate- or tape-shaped (continuous sheet or strip) material (19) with portions projecting on all sides is inserted into a stretch die (1) consisting essentially of two die halves and is processed in said stretch die (1) by mechanical and pneumatic reshaping, with slides (15) being brought, during the closing of the stretch die (1), from a withdrawn position into an advanced position forming the marginal area of the die nest plate (14) and with the projecting rim or waste strip (25) being cut off by cutting edges (9, 26) provided on said stretch die (1), characterized in that the plate- or tape-shaped material (19) becomes clamped between the undersides (24) of said slides (15) and holding-down means (10), as well as between the inner sides, facing each other, of said slides (15) and the outer sides of a clamping plate (12) forming said vertical rim (8) and that, after that, prior to the termination of the closing movement said waste strip (25) is cut off by the lowering of the second die half (4) over the first die half (3).

2. A method as claimed in Claim 1, characterized in that, following ths clamping of said plate- or tape-shaped material (19), the arrangement consisting of said slides (15) and said waste strip (25) pressed against said slides (15) is jointly pushed over the first die half (3) during the lowering of said second die half (4) in such a way that said cutting edge (26) of said second die half (4) passes said cutting edge (9) of said first die half (3).

3. A device for carrying out the method as claimed in Claim 1 which consists essentially of a stretch die (1) comprising two die halves (3, 4), which stretch die (1), for the purpose of forming the die nest plate (14) and clamping the plate or tape material (19), is provided with, among other things, movable slides (15) and holding -down means (10) and, for the purpose of cutting off said waste strip (25), is provided with cutting edges (9, 26), characterized in that said stretch die (1), in a first die half (3), comprises a cutting plate (7) corresponding to the outline of the vertical rim (8) of said lamp cover (2), over which the inserted slides (15) of said second die half (4) are capable of being lowered, that said cutting edges (9, 26) for cutting off said waste strip (25) consist of the inner edges of said slides (15) and one outer edge of said cutting plate (7) and that there is arranged on said cutting plate (7) a clamping plate (12) whose outer side is set back inwardly behind said cutting edge (9) of said cutting plate (7) to an extent corresponding to the thickness of the vertical rim (8), to be formed, of said lamp cover (2).

4. A device as claimed in Claim 3, characterized in that said slides (15), from the side of the die nest plate, have a thickness dimension extending beyond the height of said vertical rim (8) of said lamp cover (2) to be formed, by which amount of thickness said slides (15) are capable of being lowered with their cutting edges (26) past said complementary cutting edge (9) over said cutting plate (7).

5. A device as claimed in Claims 3 and 4, characterized in that at least in said cutting and in said clamping plat (7, 12) there is provided a recess (13) for receiving an assisting plug.

6. A device as claimed in any one of Claims 3 to 5, characterized in that said cutting plate (7) is provided on its outside with a flange-like surrounding strip (11) with holding-down means (10) arranged thereon.

7. A device as claimed in any one of Claims 3 to 6, characterized in that said holding-down means (10), in their unloaded positions, project over said cutting edge (9) of said cutting plate (7).

## Revendications

1. Procédé de fabrication de couvercles de lampe (2) ayant un rebord en saillie (8) pour lampes fluorescentes allongées, dans lequel un matériau thermoplastique préchauffé (19) en forme de plaque ou de bande (feuille ou bande continue) dont des parties dépassent de tous côtés est introduit dans un moule de formage (1), essentiellement, composé de deux demi-moules, et traité par formage mécanique et pneumatique, des noyaux coulissants (15) étant amenés, depuis une position retirée dans une position avancée pour constituer la zone marginale d'une cavité de formage (14) au cours de la fermeture du moule de formage (1) et une chute latérale étant cisaillée par des arêtes de cisaillement (9, 26) prévues sur ledit moule, caractérisé en ce que, le matériau en plaque ou bande (19) est serré entre la face inférieure (24) desdits noyaux (15) et des moyens de soutien (10), de même qu'entre les côtés intérieurs desdits noyaux (15) et les côtés extérieurs en vis-à-vis d'une plaque de serrage (12) formant ce rebord en saillie (8), la chute (25) étant ensuite cisaillée, avant la fin du mouvement de fermeture, par l'abaissement du second demi-moule (4) sur ledit premier demi-moule (3).

2. Procédé selon la revendication 1, caractérisé en ce qu'après le serrage dudit matériau en plaque ou bande (19), un arrangement comprenant lesdits noyaux (15) et lesdites chutes (25) pressées contre lesdits noyaux (15) est poussé comme un tout contre le premier demi-moule (3), par la descente du second demi-moule (4), au cours de laquelle ladite arête de cisaillement (26) dudit second demi-moule (4) passe ladite arête de cisaillement (9) dudit premier demi-moule (3).

3. Dispositif pour la mise en oeuvre du procédé de la revendication 1, lequel est essentiellement composé d'un moule de formage (1) se présentant en deux demi-moules (3, 4), qui, pour la formation de la cavité de formage (14), de même que pour le serrage du matériau en plaque ou bande (19), est pourvu de noyaux mobiles (15) et de moyens de soutien (10) et, pour la séparation de la chute (25), est pourvu d'arêtes de cisaillement (9, 26), caractérisé en ce que ledit moule de formage (1), dans un premier demi-moule (3), comprend une plaque de cisaillement (7) correspondant au plan extrême du rebord en saillie (8) dudit couvercle de lampe (2), sur laquelle les noyaux insérés (15) du second demi-moule (4) peuvent être abaissés et en ce que lesdites arêtes de cisaillement (9, 26) pour cisailler lesdites chutes (25), sont constituées par les bords intérieurs desdits noyaux (15) et un bord extérieur desdites plaques de cisaillement (7) et en ce que, sur ladite plaque de cisaillement (7), est diposée une plaque de serrage (12) dont le bord extérieur est arrangé en retrait vers l'intérieur, derrière ledit bord de cisaillement (9) de ladite plaque de cisaillement (7), à une distance correspondant à l'épaisseur du rebord en saillie (8) du couvercle de lampe (2) à former.

4. Dispositif selon la revendication 3, caractérisé en ce que lesdits noyaux (15), à partir du côté du moule de formage, ont une épaisseur s'étendant au-delà de la hauteur dudit rebord en saillie (8) dudit couvercle de lampe (2) à former, lesdits noyaux (15) pouvant être abaissés de cette épaisseur de manière que leurs arêtes de cisaillement (26) passent lesdites arêtes de cisaillement complémentaires (9), sur cette plaque de cisaillement (7).

5. Dispositif selon l'une quelconque des revendications 3 à 4, caractérisé en ce que, au moins dans lesdites plaques de serrage et de cisaillement (7, 12), il est prévu un évidement pour recevoir une poinçon d'assistance.

6. Dispositif selon l'une quelconque des revendications 3 à 5, caractérisé en ce que ladite plaque de cisaillement (7) est pourvue extérieurement d'une bande qui l'entoure à la façon d'un rebord (11) sur lequel sont arrangés des moyens de soutien (10).

7. Dispositif selon l'une quelconque des revendications 3 à 6, caractérisé en ce que lesdits moyens de soutien (10), dans leur position non chargée, dépassent, ladite arête de cisaillement (9) de ladite plaque de cisaillement (7).

Fig.1

Fig. 2